Europäisches Patentamt

(19) European Patent Office

Office européen des brevets

(11) Veröffentlichungsnummer: **0 044 398**
**B1**

(12) **EUROPÄISCHE PATENTSCHRIFT**

(45) Veröffentlichungstag der Patentschrift:
14.12.83

(51) Int. Cl.³: **F 01 N 3/10, F 01 N 3/28**

(21) Anmeldenummer: 81104245.6

(22) Anmeldetag: 03.06.81

(54) Abgasfilter für Verbrennungsmotoren.

(30) Priorität: 19.07.80 DE 3027499

(43) Veröffentlichungstag der Anmeldung:
27.01.82 Patentblatt 82/4

(45) Bekanntmachung des Hinweises auf die Patenterteilung:
14.12.83 Patentblatt 83/50

(84) Benannte Vertragsstaaten:
DE FR GB IT

(56) Entgegenhaltungen:
BE - A - 813 797
DE - A - 2 835 741
FR - A - 2 187 011
US - A - 3 492 098
US - A - 3 811 845
US - A - 3 996 016

(73) Patentinhaber: KNECHT Filterwerke GmbH,
Haldenstrasse 48, D-7000 Stuttgart 50 (DE)

(72) Erfinder: Faas, Harald, Friedensstrasse 8,
D-7064 Remshalden-Geradstetten (DE)
Erfinder: Lenzen, Ditrich, Dipl.-Ing., Metterstrasse 41,
D-7123 Sachsenheim 1 (DE)
Erfinder: Weik, Hans, Christian-Schöstrasse,
D-7119 Öhringen (DE)
Erfinder: Ostermann, Albrecht, Dr.rer.nat.,
Dahlienweg 11, D-7060 Schorndorf (DE)
Erfinder: Reimann, Wolfgang, Ing.grad., Herrmann
Essigstrasse 36, D-7141 Schwieberdingen (DE)

(74) Vertreter: Pfusch, Volker, Dipl.-Ing., MAHLE GMBH,
Patentabteilung Pragstrasse 26-46,
D-7000 Stuttgart 50 (DE)

ACTORUM AG

Abgasfilter für Verbrennungsmotoren

Die Erfindung betrifft ein Abgasfilter für Verbrennungsmotoren nach dem Oberbegriff des Anspruchs 1.

Abgasfilter dieser Art sind z.B. bekannt aus der DE-OS Nr. 2658892. Darüber hinaus ist es aus DE-PS Nr. 240418 bekannt, die in DE-OS Nr. 2658892 u.a. als Einbauten vorgeschlagenen Ringscheiben gegeneinander anzulegen und so miteinander zu verspannen, wobei zwischen den Ringscheiben jeweils ein durchgehender ebener Spalt als Gasdurchlass vorgesehen ist. Zur Reinigung dieser schmalen Spalten muss allerdings der Reinigungsscheibenkörper dauernd gedreht werden.

Die Aufgabe der vorliegenden Erfindung ist es, bei einem Abgasfilter Ringscheiben als Einbaukörper zu verwenden und diese bei einem aneinanderliegenden Einbau an ihrem in dem Ringspalt zwischen den Scheiben liegenden Raum so auszubilden, dass die mit dem Abgas in Berührung kommende spezifische Oberfläche mit konstruktiv einfachen Mitteln wesentlich vergrössert wird. Eine weitere Aufgabe besteht darin, die Abgase zwischen den Ringscheiben derart zu führen, dass in dem Abgas enthaltene Feststoffteilchen wie Russ durch Zentrifugal- und Adhäsionskräfte zur Ablagerung an die umströmten Oberflächen der Ringscheiben gebracht werden. Eine dauernde mechanische Reinigung der Ringscheiben soll entbehrlich sein.

Gelöst werden diese Aufgaben durch ein Abgasfilter mit Einbauten nach dem kennzeichnenden Teil des Anspruchs 1.

Die erfindungsgemässen Ringscheiben bestehen zweckmässigerweise aus Keramik.

Jede Ringscheibe weist vorteilhafterweise zumindest auf einer Seite vier bis sechs spiralförmige Kanäle auf.

Je nach erforderlichem Strömungsquerschnitt, der sich aus der Summierung der einzelnen Kanalquerschnitte ergibt, werden entsprechend viele Ringscheiben zur Bildung eines einheitlichen Einbaukörpers in die Reaktionskammer des Filtergehäuses eingebaut. Das Abgas kann je nach Auslegung des Filters die Scheiben jeweils radial entweder von innen nach aussen oder auch von aussen nach innen durchströmen. Für optimale Strömungsverhältnisse im Filter ist es zweckmässig, die radialen Ein- bzw. Austrittsöffnungen der Kanäle bei aneinanderliegenden Ringscheiben zu versetzen. In der Regel werden die zu einem gemeinsamen Einbaukörper aneinandergefügten Ringscheiben jede für sich die gleiche Anzahl an spiralförmigen Kanälen aufweisen. In bestimmten Fällen kann es jedoch auch einmal zweckmässig sein, Ringscheiben mit unterschiedlicher Anzahl an spiralförmigen Kanälen aneinanderzufügen.

Die spiralförmigen Kanäle können jeweils auf nur einer Seite der Ringscheiben angeordnet sein. Die Ringscheiben liegen dann so aneinander, dass die Kanäle jeweils durch die Seite der benachbarten Ringscheiben abgedeckt werden, die keine Kanäle aufweist. Besitzen jeweils beide Seiten der Ringscheiben Kanäle, so kommen die Kanalöffnungen aneinanderstossender Ringscheiben in der Regel nicht deckungsgleich aufeinander zu liegen; es wird vielmehr zur Funktionsverbesserung angestrebt, die Kanäle miteinander überschneiden zu lassen. Es entstehen dann sich grössenmässig verändernde Strömungsquerschnitte. Eine Veränderung der Strömungsquerschnitte über die Kanallänge lässt sich auch durch Variation der den Kanal bildenden Wände erreichen, die z.B. Vorsprünge aufweisen können. Eine besonders wirksame Massnahme besteht darin, den Kanal in Strömungsrichtung in Art eines Diffusors sich erweitern zu lassen.

Für die Ringscheiben eignet sich Keramikmaterial besonders, da es hitzebeständig ist und auch eine gute Wärmekapazität aufweist. Denn bei Abgasfiltern, insbesondere solchen zur Abscheidung von Russ, hängt die Wirkung des Filters ganz wesentlich von der maximal erzielbaren Temperatur in der Reaktionskammer ab.

Der Russ wird in dem erfindungsgemässen Filter durch Verbrennen entfernt. Eine Verbrennung ist jedoch nur nach Erreichung einer für eine solche Verbrennung erforderlichen hohen Temperatur im Abgasfilter möglich. Im Teillastbetrieb eines Verbrennungsmotors von Kraftfahrzeugen weist das Abgas jedoch nicht immer die zur Russabbrennung erforderlichen hohen Temperaturen auf. In diesen Betriebszuständen kommt es darauf an, den Russ an den Oberflächen der Einbauten in der Reaktionskammer des Filters zunächst einmal anzulagern, um diesen in Lastzuständen des Motors, die ausreichend hohe Abgastemperaturen erzeugen, dann abzubrennen.

Zur Verbesserung der Russanlagerung an den Oberflächen der Einbauteile des Reaktors kann es zweckmässig sein, die Oberfläche aufzurauen oder zu beschichten. Zweckmässig kann es darüber hinaus sein, die Oberflächen mit katalytisch wirkenden Stoffen zu überziehen. Dabei kann die katalytische Wirkung in verschiedene Richtungen festgelegt werden, so dass nicht nur die Russverbrennung verbessert wird, sondern auch andere schädliche Stoffe im Abgas abgebaut werden können.

Ein Ausführungsbeispiel der Erfindung ist in der Zeichnung dargestellt und zwar zeigen jeweils schematisch:

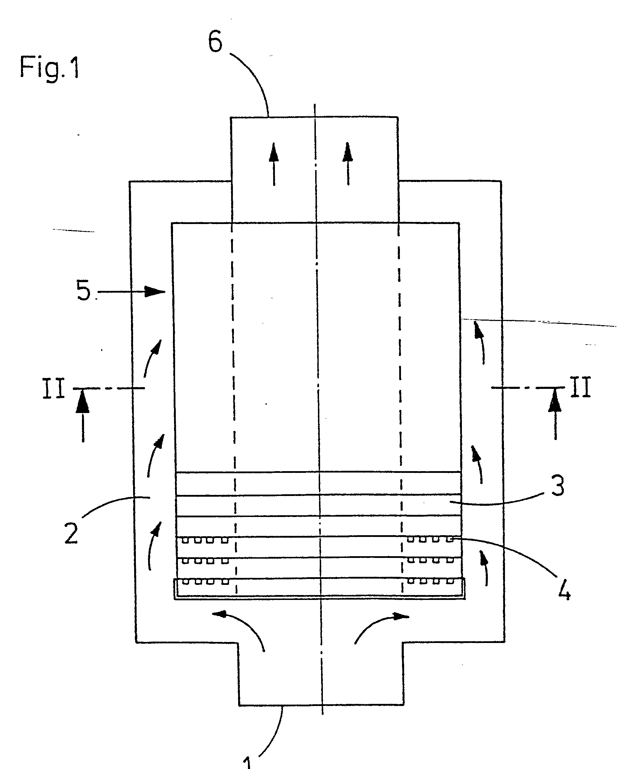

Fig. 1 einen Längsschnitt durch ein erfindungsgemäss aufgebautes Abgasfilter,

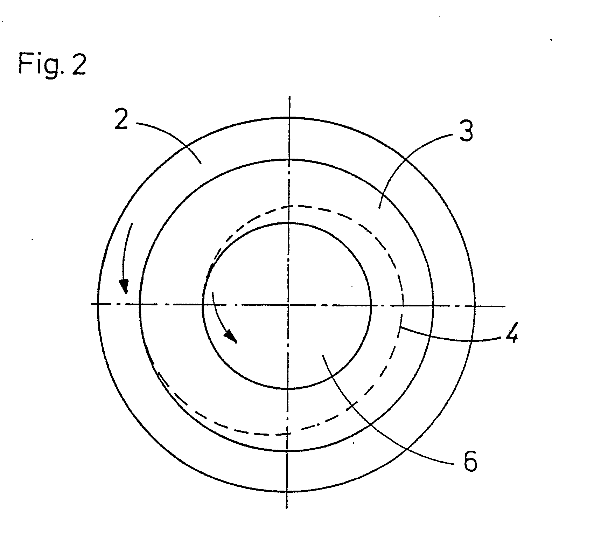

Fig. 2 einen Querschnitt durch das Abgasfilter nach Fig. 1, und

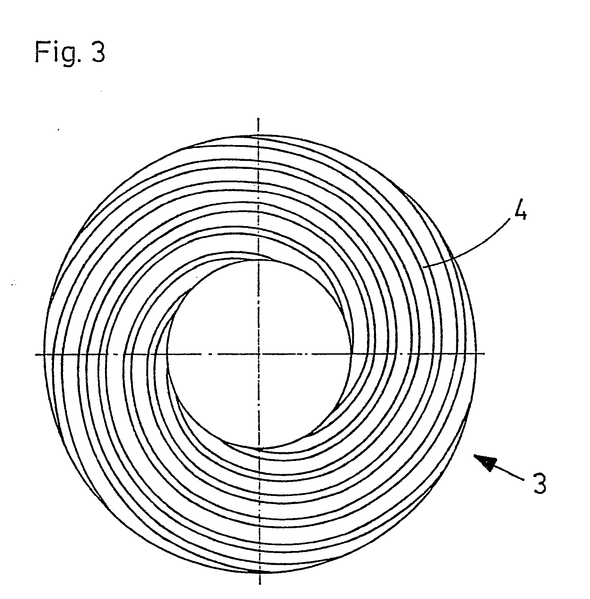

Fig. 3 die Ansicht einer erfindungsgemässen Ringscheibe mit spiralförmig angeordneten Strömungskanälen.

Das zu reinigende Abgas tritt durch den Stutzen 1 in die Reaktionskammer 2 des Abgasfilters. Die einzelnen Ringscheiben 3 mit den spiralförmigen Strömungskanälen 4 sind zu dem Einbaukörper 5 zusammengefügt. Der Einbaukörper 5 und damit die Ringscheiben 3 werden radial von aussen nach innen durchströmt. Das gereinigte Abgas verlässt das Filter durch den Stutzen 6. In dem beschriebenen Beispiel weisen die Ringscheiben 3 jeweils sechs nur auf einer Seite liegende spiralförmige Strömungskanäle 4 auf.

## Patentansprüche

1. Abgasfilter für Verbrennungsmotoren zur Abscheidung von Russ, bei dem das Abgas bei einer möglichst hohen Temperatur einer Reaktorkammer (2) zugeführt wird, in der es über temperaturbeständige und gegebenenfalls auch katalytisch wirkende, axial hintereinander angeordnete Ringscheiben (3) geführt wird, dadurch gekennzeichnet, dass die Ringscheiben (3) in an sich bekannter Weise axial aneinanderliegend gegeneinander verspannt sind und jede für sich mindestens auf einer Seite mit mindestens einem zwischen Innen- und Aussenumfang spiralförmig verlaufenden offenen Strömungskanal (4) versehen ist, der axial durch Anlage an die jeweils benachbarte Ringscheibe (3) abgedeckt ist und der an seinen radialen Enden offen in die innere und äussere Mantelfläche der einzelnen wie auch der aneinanderliegenden Ringscheiben (3) mündet.

2. Abgasfilter nach Anspruch 1, dadurch gekennzeichnet, dass die Ringscheiben (3) aus Keramikmaterial bestehen.

3. Abgasfilter nach einem der Ansprüche 1 oder 2, dadurch gekennzeichnet, dass jede Ringscheibe (3) zumindest auf einer Seite wenigstens vier spiralförmige Strömungskanäle (4) aufweist.

4. Abgasfilter nach einem der vorhergehenden Ansprüche, dadurch gekennzeichnet, dass die Ringscheiben (3) derart aneinanderliegen, dass die radialen Ein- und Austrittsöffnungen über die axiale Länge des Einbaukörpers (5) umfangsmässig zumindest teilweise gegeneinander versetzt angeordnet sind.

5. Abgasfilter nach einem der vorhergehenden Ansprüche, dadurch gekennzeichnet, dass der Strömungsquerschnitt der zwischen aneinanderliegenden Ringscheiben (3) verlaufenden Strömungskanäle (4) über deren Länge variiert.

## Claims

1. Exhaust-gas filter for combustion engines, for the separation of soot, wherein the exhaust gas is conveyed at the highest possible temperature to a reactor chamber (2) in which it is guided over temperature-stable and possible also catalytically acting annular discs (3) situated axially in succession to one another, characterized by the fact that the annular discs (3) are braced against one another, resting axially against one another, each one in itself being provided, at least on one side, with at least one open flow channel (4) which takes a spiral course between the inner and the outer periphery, and which is sealed off in the axial direction by resting against the particular annular disc (3) which is adjacent to it, and which at its radial ends leads open into the inner and outer casing surface of the individual and also of the mutually adjacent annular discs (3).

2. Exhaust-gas filter in accordance with claim 1, characterized by the fact that the annular discs (3) consist of ceramic material.

3. Exhaust-gas filter in accordance with claim 1 or 2, characterized by the fact that each annular disc (3) is provided, at least on one side, with at least four spiral flow channels (4).

4. Exhaust-gas filter in accordance with one of the foregoing claims, characterized by the fact that the annular discs (3) rest against one another in such a way that the radial inlet and outlet apertures, over the axial length of the insertion body (5), are peripherally at least partly offset in relation to one another.

5. Exhaust-gas filter in accordance with one of the foregoing claims, characterized by the fact that the flow cross-section of the flow channels (4) taking their course between mutually adjacent annular discs (3) varies over their length.

## Revendications

1. Filtre à gaz d'échappement pour moteurs à combustion interne en vue de l'élimination de la suie, dans lequel les gaz d'échappement sont dirigés, avec une température le plus élevée possible, vers une chambre de réaction (2) dans laquelle ils sont guidés par des disques annulaires placés axialement les uns derrière les autres, résistant à la température et agissant aussi éventuellement par catalyse, caractérisé par le fait que les disques annulaires (3) sont coincés les uns contre les autres en juxtaposition axiale, d'une manière connue en soi, et sont munis chacun individuellement, au moins d'un côté, d'au moins un canal de circulation (4) qui, ouvert et s'étendant en spirale entre la circonférence interne et la circonférence externe, est recouvert axialement avec le disque annulaire voisin respectif (3) venant en contact avec lui et qui, ouvert à ses extrémités radiales, débouche dans les surfaces des enveloppes interne et externe des disques annulaires individuels (3), ainsi que des disques annulaires adjacents.

2. Filtre à gaz d'échappement selon la revendication 1, caractérisé par le fait que les disques annulaires (3) sont en une matière céramique.

3. Filtre à gaz d'échappement selon l'une des revendications 1 ou 2, caractérisé par le fait que chaque disque annulaire (3) présente, au moins d'un côté, au moins quatre canaux spiroïdaux de circulation (4).

4. Filtre à gaz d'échappement selon l'une des revendications précédentes, caractérisé par le fait que les disques annulaires (3) sont juxtaposés de telle façon que les orifices radiaux d'entrée et de sortie soient, sur la longueur axiale de la pièce incorporée (5), au moins partiellement décalés les uns des autres dans le sens périphérique.

5. Filtre à gaz d'échappement selon l'une des revendications précédentes, caractérisé par le fait que la section d'écoulement des canaux de circulation (4) s'étendant entre des disques annulaires adjacents (3) varie sur la longueur de ces canaux.

4

Fig.1

Fig. 2

Fig. 3